(19) Europäisches Patentamt
European Patent Office
Office européen des brevets

(11) **EP 2 797 221 A1**

(12) **EUROPEAN PATENT APPLICATION**

(43) Date of publication:
**29.10.2014 Bulletin 2014/44**

(51) Int Cl.:
***H02P 25/18*** (2006.01)

(21) Application number: **13165238.0**

(22) Date of filing: **24.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **J.D Components Co., Ltd.**
**Shou Shui Hsiang, Chang Hua Hsien (TW)**

(72) Inventors:
• **Wang, Shih-Chieh**
**Chang Hua Hsien (TW)**

• **Lee, Yuan-Kuei**
**438 Taichung City (TW)**
• **Wu, Mei-Hao**
**235 New Taipei City (TW)**

(74) Representative: **Becker Kurig Straus**
**Patentanwälte**
**Bavariastrasse 7**
**80336 München (DE)**

(54) **Motor winding and power electronic switch assembly having switchable output capability**

(57)     A motor winding and power electronic switch assembly (10) having switehable output capability is disclosed to include a first winding set (AW) including a first upper winding (AW1) and first lower winding (AW2) connected to a common contact (P), a first switch set (11) including four power electronic switches (S1,S2,S3,S4) electrically connected to the first winding set (AW), a second winding set (BW) including a second upper winding (BW1) and a second lower winding (BW2) and connected to the common contact (P), a second switch set (21) including four power electronic switches (S5,S6,S7,S8) electrically connected to the second winding set (BW), a third winding set (CW) including a third upper winding (CW1) and a third lower winding (CW2) connected to the common contact (P), a third switch set (31) including four power electronic switches (S9,S10,S11,S12) electrically connected to the third winding set (CW), and a configuration control means for controlling on/off of the power electronic switches (S1,S2,S3,S4,S5,S6,S7,S8,S9,S10, S11,S12) to form a H type (H bridge) drive configuration or Y type drive configuration, achieving the effect of switching output status.

FIG.1

EP 2 797 221 A1

**Description**

**BACKGROUND OF THE INVENTION**

**1. Field of the Invention**

The present invention relates to motor driving technology and more particularly, to a motor winding and power electronic switch assembly having switchable output capability.

**2. Description of the Related Art**

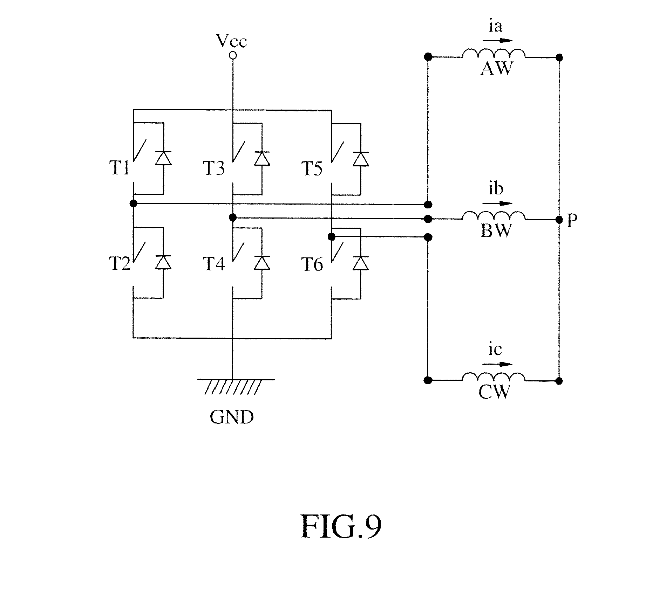

A conventional motor winding assembly is known, as shown in FIG. 9, comprising three Y-connected windings **AW,BW,CW** corresponding to phases **A, B** and **C,** and six power electronic switches **T1,T2,T3,T4,T5,T6** respectively switchable on and off to change the current flowing through each of the aforesaid windings, driving the three-phase motor.

However, according to the design of the aforesaid Y-connected motor winding assembly, if you wish to obtain a relatively higher no-load speed during operation of the motor, the starting torque of the motor will be lowered, on the contrary, enabling the motor to provide a relatively higher starting torque, the no-load speed of the motor will be constrained, thus, the motor operational speed range is limited.

Taiwan Patent Publication No. 401923 discloses a technique for switching motor windings between series and parallel configurations. Thus, the motor windings can be switched to the series configuration for low-speed and high-torque application to provide a high torque output. Further, if you wish to increase the speed range after the revolving speed of the motor has been increased, you can switch the motor windings to the parallel configuration to increase the speed range.

Further, Taiwan Patent Publication No. 200538322 discloses another technique for changing the motor driving configuration by: using a switching control means to control every switch, determining the number of turns of winding to be connected to the motor.

**SUMMARY OF THE INVENTION**

The present invention has been accomplished under the circumstances in view. It is the main object of the present a motor winding and power electronic switch assembly having switchable output capability, which changes the motor driving configuration to increase the working speed range by means of controlling on/off status of every switch.

To achieve this and other objects of the present invention, a motor winding and power electronic switch assembly having switchable output capability comprises a first winding set comprising a first upper winding and a first lower winding, the first upper winding and the first lower winding each having one end thereof connected to a common contact, a first switch set comprising four power electronic switches electrically connected to the first winding set, a second winding set comprising a second upper winding and a second lower winding, the second upper winding and the second lower winding each having one end thereof connected to the common contact, a second switch set comprising four power electronic switches electrically connected to the second winding set, a third winding set comprising a third upper winding and a third lower winding, the third upper winding and the third lower winding each having one end thereof connected to the common contact, a third switch set comprising four power electronic switches electrically connected to the third winding set, and a configuration control means adapted for controlling on/off of the power electronic switches to selectively combine the first winding set, the second winding set and the third winding set into a H type configuration or Y type configuration, achieving the effect of switching output status. The first switch set, the second switch set and the third switch set are electrically connected to a power source and a ground terminal.

Other advantages and features of the present invention will be fully understood by reference to the following specification in conjunction with the accompanying drawings, in which like reference signs denote like components of structure.

**BRIEF DESCRIPTION OF THE DRAWINGS**

FIG. 1 is a circuit diagram of a motor winding and power electronic switch assembly having switchable output capability in accordance with the present invention.

FIG. 2 is a schematic circuit diagram illustrating an operation status of the motor winding and power electronic switch assembly having switchable output capability in accordance with the present invention.

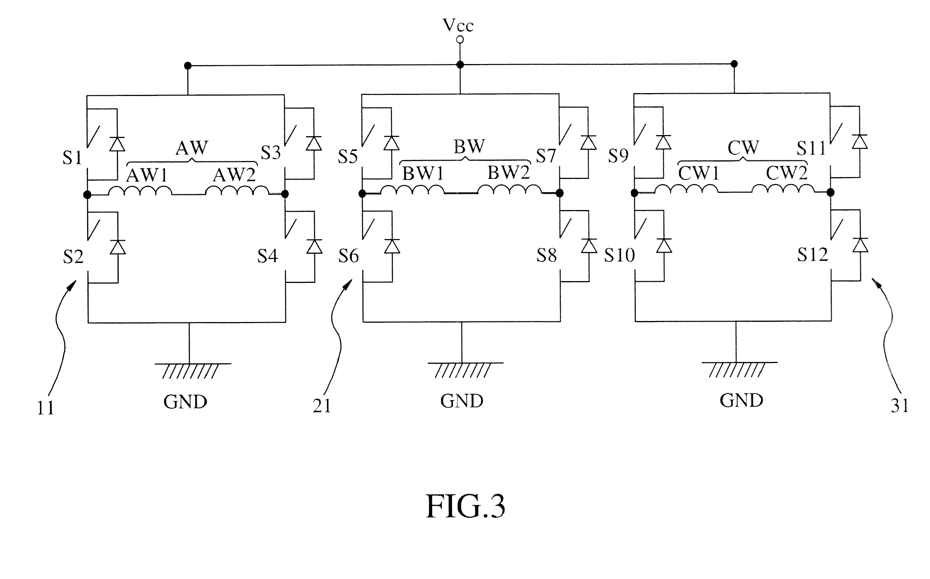

FIG. 3 is an equivalent circuit diagram of the present invention, illustrating a H type configuration operation status of the motor winding and power electronic switch assembly having switchable output capability.

FIG. 4 is a schematic applied view of the present invention, illustrating the flowing direction of current through each winding under a H type six-step square wave drive configuration.

FIG. 5 is a schematic applied view of the present invention, illustrating the driving architecture under an H type sinusoidal drive configuration.

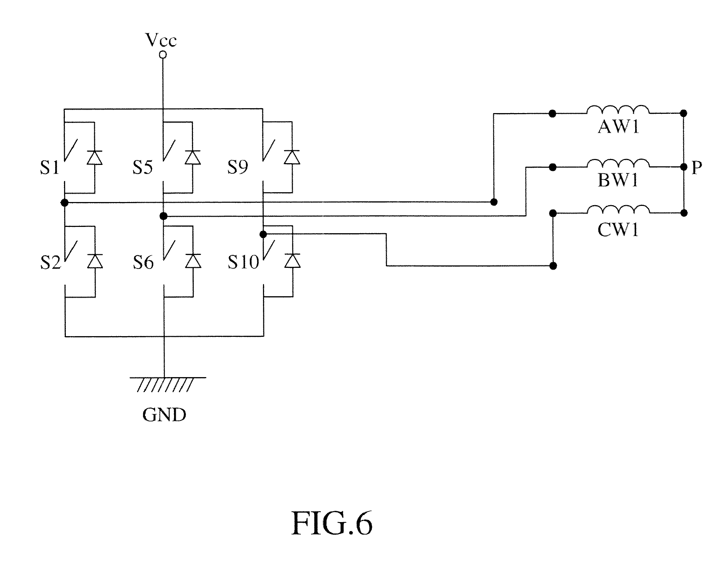

FIG. 6 is another equivalent circuit diagram of the present invention, illustrating a number of the power electronic switches matched with each upper winding for Y type mode operation.

FIG. 7 is another equivalent circuit diagram of the present invention, illustrating a number of the power electronic switches matched with each lower winding for Y type mode operation.

FIG. 8 is a schematic drawing illustrating the relationship between the motor torque and velocity in accordance with the present invention.

FIG. 9 is a circuit diagram illustrating a motor winding and power electronic switch arrangement according to the prior art.

## DETAILED DESCRIPTION OF THE INVENTION

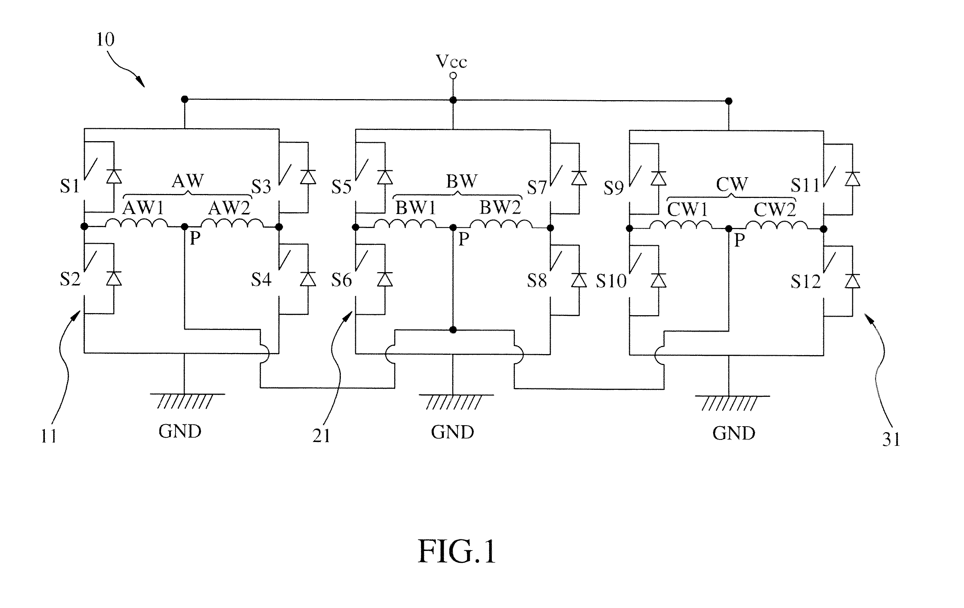

Referring to FIG. 1, a motor winding and power electronic switch assembly having switchable output capability **10** in accordance with the present invention is shown comprising a first winding set **AW**, a first switch set **11**, a second winding set **BW**, a second switch set **21**, a third winding set **CW**, a third switch set **31**, and mode control means (not shown).

The first winding set **AW** comprises a first upper winding **AW1** and a first lower winding **AW2**. The first upper winding **AW1** and the first lower winding **AW2** each have one end thereof connected to a common contact **P**. Further, the first upper winding **AW1** and the first lower winding **AW2** are symmetrical. In this embodiment, the symmetrical characteristic means that the upper winding and the lower winding have the same number of turns. However, it is still allowable that the windings are configured to have a number of turns approximately similar, i.e., the aforesaid symmetric characteristic is not limited to the condition of having the same number of turns.

The first switch set **11** comprises four power electronic switches electrically connected to the first winding set **AW**. The four power electronic switches of the first switch set **11** are designated as the first power electronic switch **S1**, the second power electronic switch **S2**, the third power electronic switch **S3**, and the fourth power electronic switch **S4**. The first power electronic switch **S1** and the second power electronic switch **S2** are connected in series, and both connected to the first upper winding **AW1** to exhibit a Y-connected circuit. The third power electronic switch **S3** and the fourth power electronic switch **S4** are connected in series, and both connected to the first lower winding **AW2** to exhibit a Y-connected circuit.

The second winding set **BW** comprises a second upper winding **BW1** and a second lower winding **BW2**. The second upper winding **BW1** and the second lower winding **BW2** each have one end thereof connected to the aforesaid common contact **P**. Further, the second upper winding **BW1** and the second lower winding **BW2** are symmetrical. In this embodiment, the symmetrical characteristic means that the upper winding and the lower winding have the same number of turns.

The second switch set **21** comprises four power electronic switches electrically connected to the second winding set **BW**. The four power electronic switches of the second switch set **21** are designated as the fifth power electronic switch **S5**, the sixth power electronic switch **S6**, the seventh power electronic switch **S7**, and the eighth power electronic switch **S8**. The fifth power electronic switch **S5** and the sixth power electronic switch **S6** are connected in series , and both connected to the second upper winding **BW1** to exhibit a Y-connected circuit. The seventh power electronic switch **S7** and the eighth power electronic switch **S8** are connected in series, and both connected to the second lower winding **BW2** to exhibit a Y-connected circuit.

The third winding set **CW** comprises a third upper winding **CW1** and a third lower winding **CW2**. The third upper winding **CW1** and the third lower winding **CW2** each have one end thereof connected to the aforesaid common contact **P**. Further, the third upper winding **CW1** and the third lower winding **CW2** are symmetrical. This symmetrical characteristic, as stated above, is not limited to the condition of having the same number of turns.

The third switch set **31** comprises four power electronic switches electrically connected to the third winding set **CW**. The four power electronic switches of the second switch set **31** are designated as the ninth power electronic switch **S9**, the tenth power electronic switch **S10**, the eleventh power electronic switch **S11**, and the twelfth power electronic switch **S12**. The ninth power electronic switch S9 and the tenth power electronic switch **S10** are connected in series, and both connected to the third upper winding **CW1** to exhibit a Y-connected circuit. The eleventh power electronic switch **S11** and the twelfth power electronic switch **S12** are connected in series, and both connected to the third lower winding **CW2** to exhibit a Y-connected circuit.

The mode control means is adapted for controlling on/off of the power electronic switches to combine the first winding set **AW**, the second winding set **BW** and the third winding set **CW** into an H type mode or Y type mode and to further achieve the desired output status switching effects. This embodiment is to cause a synchronized action or complementary action on each power electronic switch **S1~S12** of the first switch set **11,** second switch set **21** and third switch set **31.** The synchronized action means that the switches of each selected matching pair are synchronously turned on or synchronously turned off. The complementary action means that one switch of each selected matching pair is OFF and the other switch is ON. Further, when each power electronic switch **S1~S12** is ON, a pulse width modulation (PWM) signal is applied to control each power electronic switch **S1~S12,** combining the first winding set **AW,** the second winding set **BW** and the third winding set **CW** to form a H type mode or Y type mode.

The first switch set **11,** the second switch set **21** and the third switch set **31** are electrically connected to a power source **VCC** and a ground terminal **GND.**

If you wish to combine the first winding set **AW,** the second winding set **BW** and the third winding set **CW** into an H type mode, the operation is outlined hereinafter.

The status of the synchronous action in the mode control means is: the first power electronic switch **S1** and the fourth power electronic switch **S4** work synchronously; the second power electronic switch **S2** and the third power electronic switch S3 work synchronously; the fifth power electronic switch **S5** and the eighth power electronic switch **S8** work synchronously; the sixth power electronic switch **S6** and the seventh power electronic switch **S7** work synchronously; the ninth power electronic switch **S9** and the twelfth power electronic switch **S12** work synchronously; the tenth power electronic switch **S10** and the eleventh power electronic switch **S11** work synchronously.

The status of the complementary action in the mode control means is: the first power electronic switch **S1** and the second power electronic switch **S2** work in a complementary manner; the third power electronic switch **S3** and the fourth power electronic switch **S4** work in a complementary manner; the fifth power electronic switch **S5** and the sixth power electronic switch **S6** work in a complementary manner; the seventh power electronic switch **S7** and the eighth power electronic switch **S8** work in a complementary manner; the ninth power electronic switch **S9** and the tenth power electronic switch **S10** work in a complementary manner; the eleventh power electronic switch **S11** the twelfth power electronic switch **S12** work in a complementary manner.

Further, the mode control means comprises: terminal voltages or voltage modulation rates for controlling the first switch set **11,** the second switch set **21** and the third switch set **31** respectively.

By means of the aforesaid mode control means, the first winding set **AW,** the second winding set **BW** and the third winding set **CW** can be combined to form an H type mode for driving the motor.

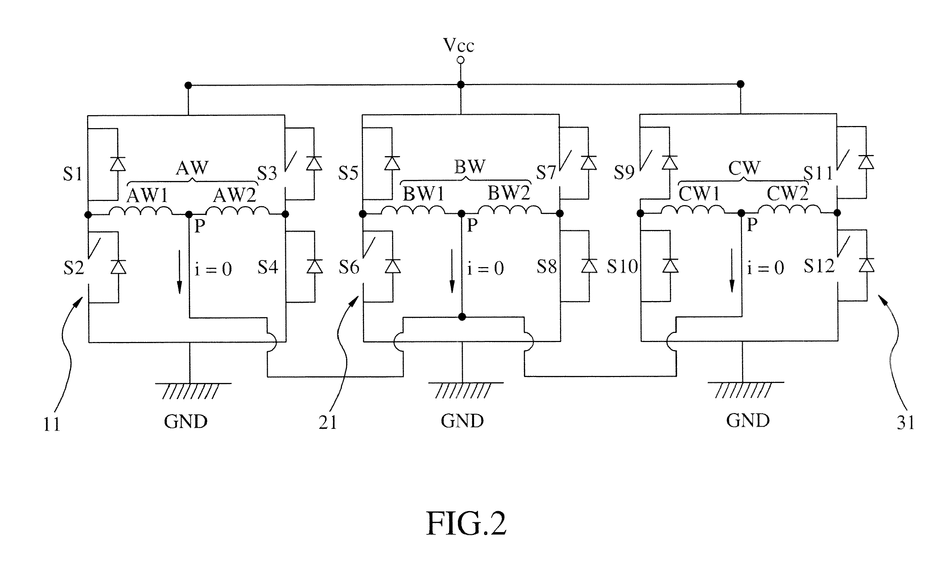

In the H type mode, by means of the symmetrical relationship between the first, second and third upper windings **AW1,BW1,CW1** and the first, second and third lower windings **AW2,BW2,CW3,** the electric current flowing from each winding through the common contact **P** to the other windings is zero (i=0), as shown in FIG. 2. Thus, the co-relation of the common contact **P** can be neglected, considering the combination of the winding sets as an H type mode.

If you wish to combine the first winding set **AW,** the second winding set **BW** and the third winding set **CW** into a Y type mode, the operation is outlined hereinafter.

The synchronous action and complementary action in the mode control means are same as the aforesaid H type mode.

However, the mode control means does not control the terminal voltage or voltage modulation rate of the first switch set **11,** the second switch set **21** and the third switch set **31** respectively. It employs the known field oriented control (FOC) technique to control the pulse width modulation status of each power electronic switch **S1~S12.**

By means of the aforesaid mode control means, the first winding set **AW,** the second winding set **BW** and the third winding set **CW** can be combined to form a Y type configuration for driving the motor., wherein the aforesaid complementary action enables each upper winding to provide an electric current to the other upper windings, or enables each upper winding to provide an electric current to the other lower windings, considering the combination of the winding sets as a Y type configuration. The operation of this Y type configuration will be described latter in conjunction with the annexed drawings.

When assembling the motor, the first winding set **AW,** the second winding set **BW** and the third winding set **CW** are respectively mounted in respective stator grooves. The number of the stator grooves should be a multiple of 3, matching the number of the three upper windings or three lower windings.

Further, in this embodiment, sinusoidal drive configuration or square wave drive configuration is selected for pulse width modulation. If square wave drive configuration is selected, six-step square wave drive configuration can be employed. If sinusoidal drive configuration is selected, sinusoidal pulse width modulation (SPWM) or space vector pulse width module (SVPWM) can be employed.

The following Table I shows an example of the application of six-step square wave drive configuration to drive each power electronic switch. This drive configuration can be used in an H type configuration to drive the motor.

**Table I:**

| Status | S1 | S2 | S3 | S4 | S5 | S6 | S7 | S8 | S9 | S10 | S11 | S12 |
|---|---|---|---|---|---|---|---|---|---|---|---|---|
| Status 5 | PWM | OFF | OFF | PWM | OFF | OFF | OFF | OFF | OFF | PWM | PWM | OFF |

(continued)

| Status | S1 | S2 | S3 | S4 | S5 | S6 | S7 | S8 | S9 | S10 | S11 | S12 |
|---|---|---|---|---|---|---|---|---|---|---|---|---|
| Status 1 | OFF | OFF | OFF | OFF | PWM | OFF | OFF | PWM | OFF | PWM | PWM | OFF |
| Status 3 | OFF | PWM | PWM | OFF | PWM | OFF | OFF | PWM | OFF | OFF | OFF | OFF |
| Status 2 | OFF | PWM | PWM | OFF | OFF | OFF | OFF | OFF | PWM | OFF | OFF | PWM |
| Status 6 | OFF | OFF | OFF | OFF | OFF | PWM | PWM | OFF | PWM | OFF | OFF | PWM |
| Status 4 | OFF | OFF | OFF | PWM | OFF | PWM | PWM | OFF | OFF | OFF | OFF | OFF |

In which: **S1** represents the first power electronic switch, **S2** represents the second power electronic switch,... and so on; PWM represents the power electronic switch is ON and pulse width modulation is performed; **OFF** represents the power electronic switch is OFF.

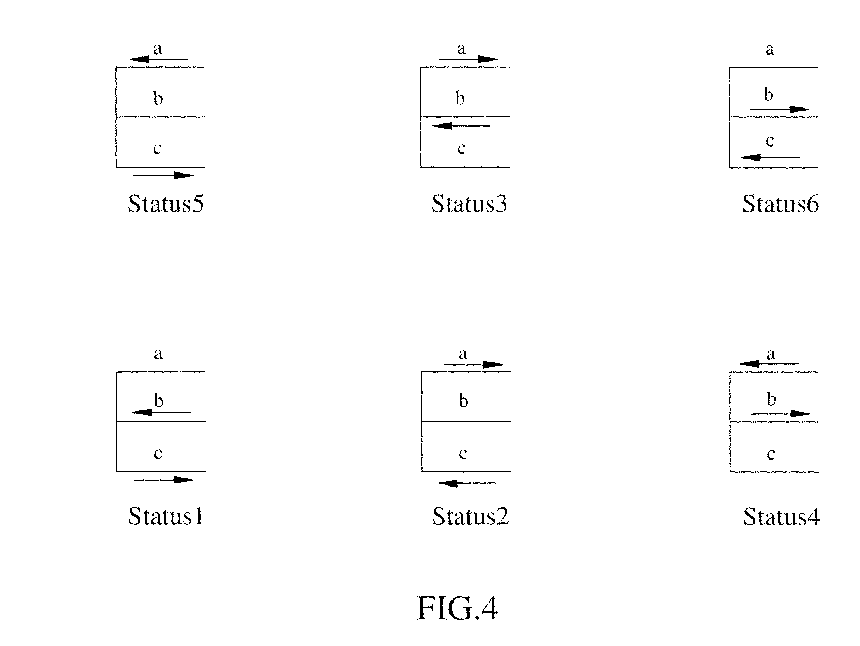

In the case where the first winding set **AW** is phase A, the second winding set **BW** is phase B and the third winding set **CW** is phase C, the drive configuration is illustrated in FIG. 4, in which a,b,c respectively represent the first winding set, the second winding set and the third winding set; the arrowhead sign indicates the direction of the electric current. Thus, the terminal voltage of each switch set **11,21,31** is controlled.

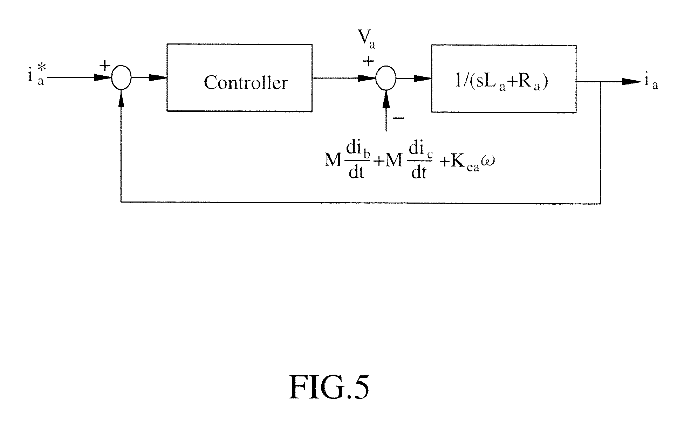

FIG. 5 illustrates a motor drive architecture with the application of a sine wave to drive each switch set **11,21,31.** This drive method can be used in an H type drive configuration to drive the motor. In FIG. 5, the corresponding meanings of the respective reference signs are stated in the following Table II.

**Table II:**

| | |
|---|---|
| $L_a$ | a phase self-inductance |
| M | motor mutual inductance |
| $R_a$ | a phase resistance |
| $V_a$ | a phase terminal voltage |
| I | phase current pick value |
| $\omega_e$ | motor electrical angular velocity |
| $K_{ea}$ | a phase motor induced electromotive force constant |
| $i_a^*$ | a phase current command |
| $i_a$ | a phase current |
| $\omega$ | motor mechanical angular velocity |

Normally, the motor mutual inductance (M) is low and can be decoupled, and therefore, control blocks $i_b$ and $i_c$ can be provided, in which:

$$i_a^* = I\sin\omega_e t$$

$$i_b^* = I\sin(\omega_e t - 120^o)$$

$$i_c^* = I\sin(\omega_e t - 240^o).$$

At this point we can see that the sinusoidal drive method illustrated in FIG. 5 can control the voltage modulation rate of each switch set **11,21,31,** obtaining the respective current in phase A, phase B or phase C , achieving the effect of sinusoidal drive mode for H type configuration.

In the case for Y type configuration control, field oriented control (FOC) techniques can be employed to control the pulse width modulation of each power electronic switch. Under the architecture of the first, second, fifth, sixth, ninth and tenth power electronic switches **S1,S2,S5,S6,S9,S10,** the Y type configuration thus formed is as illustrated in FIG.

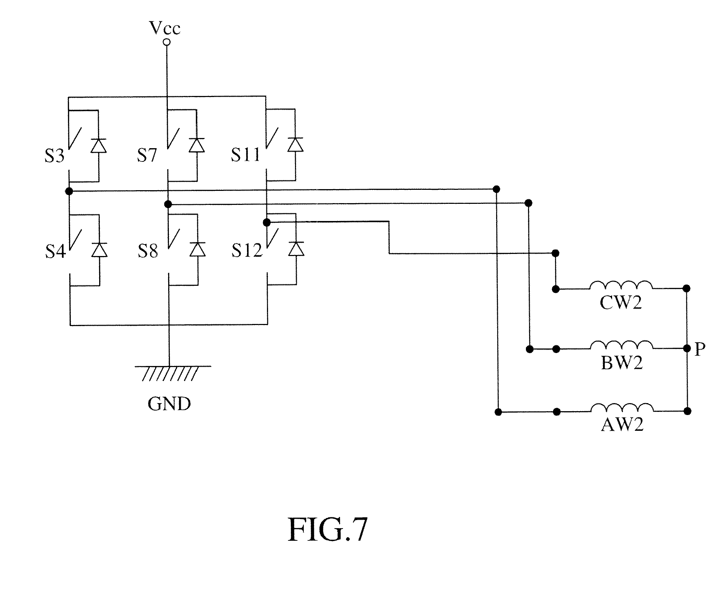

6. Under the architecture of the third, fourth, seventh, eighth, eleventh and twelfth power electronic switches **S3,S4,S7,S8,S11,S12,** the Y type configuration thus formed is as illustrated in FIG. 7. Because the field oriented control (FOC) techniques are of the known art, no further detailed description in this regard will be given.

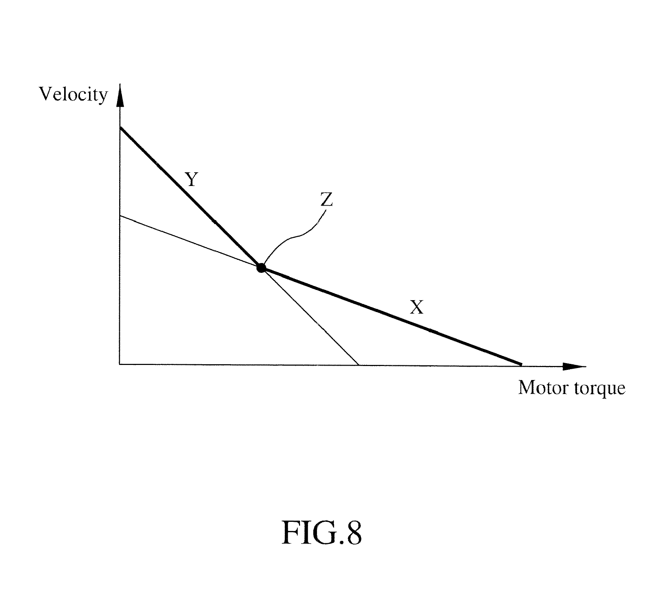

FIG. 8 illustrates the relationship between the motor torque and the velocity, in which: the **X** curve indicates an H type configuration drive mode practical for high torque and low velocity application; the **Y** curve indicates a Y type configuration drive mode practical for low torque and high velocity application. Therefore, we can see that using the intersected point **Z** between the **X** curve and the **Y** curve as a switching point between the H type configuration and the Y type configuration allows switching to the Y type configuration drive mode when the velocity surpasses the intersected point Z, or to the H type configuration drive mode when the velocity drops below the intersected point **Z,** improving the motor driving efficiency and operating speed range.

From the above we can see that the structure of the present invention is totally different from the prior art techniques, it changes the motor drive mode by means of controlling the on/off status of each switch.

**Claims**

1. A motor winding and power electronic switch assembly (10) having switchable output capability, comprising:

   a first winding set (AW) comprising a first upper winding (AW1) and a first lower winding (AW2), said first upper winding (AW1) and said first lower winding (AW2) each having one end thereof connected to a common contact (P);
   a first switch set (11) comprising four power electronic switches (S1,S2,S3,S4) electrically connected to said first winding set (AW);
   a second winding set (BW) comprising a second upper winding (BW1) and a second lower winding (BW2), said second upper winding (BW1) and said second lower winding (BW2) each having one end thereof connected to said common contact (P);
   a second switch set (21) comprising four power electronic switches (S5,S6,S7,S8) electrically connected to said second winding set (BW);
   a third winding set (CW) comprising a third upper winding (CW1) and a third lower winding (CW2), said third upper winding (CW1) and said third lower winding (CW2) each having one end thereof connected to said common contact (P);
   a third switch set (31) comprising four power electronic switches (S9,S10,S11,S12) electrically connected to said third winding set (CW); and
   a configuration control means adapted for controlling on/off of said power electronic switches (S1,S2,S3,S4,S5,S6,S7,S8,S9,S10,S11,S12) to selectively combine said first winding set (AW), said second winding set (BW) and said third winding set (CW) into a H type configuration or Y type configuration, achieving the effect of switching output status;
   said first switch set (11), said second switch set (21) and said third switch set (31) being electrically connected to a power source (VCC) and a ground terminal (GND).

2. The motor winding and power electronic switch assembly (10) having switchable output capability as claimed in claim 1, wherein the four power electronic switches (S1,S2,S3,S4) of said first switch set (11) are designated as the first power electronic switch (S1), the second power electronic switch (S2), the third power electronic switch (S3) and the fourth power electronic switch (S4); the four power electronic switches (S5,S6,S7,S8) of said second switch set (21) are designated as the fifth power electronic switch (S5), the sixth power electronic switch (S6), the seventh power electronic switch (S7) and the eighth power electronic switch (S8); the four power electronic switches (S9,S10,S11,S12) of said third switch set (31) are designated as the ninth power electronic switch (S9), the tenth power electronic switch (S10), the eleventh powder electronic switch (S11) and the twelfth power electronic switch (S12); said first power electronic switch (S1) and said second power electronic switch (S2) are connected in series, and both connected to said first upper winding (AW1) to exhibit a Y-connected circuit; said third power electronic switch (S3) and said fourth power electronic switch (S4) are connected in series, and both connected to said first lower winding (AW2) to exhibit a Y-connected circuit; the fifth power electronic switch (S5) and the sixth power electronic switch (S6) are connected in series, and both connected to said second upper winding (BW1) to exhibit a Y-connected circuit; said seventh power electronic switch (S7) and said eighth power electronic switch (S8) are connected in series, and both connected to said second lower winding (BW2) to exhibit a Y-connected circuit; said ninth power electronic switch (S9) and said tenth power electronic switch (S10) are connected in series, and both connected to said third upper winding (CW1) to exhibit a Y-connected circuit; said eleventh power electronic switch (S11) and said twelfth power electronic switch (S12) are connected in series, both connected to said third lower winding (CW2) to exhibit a Y-connected circuit.

3. The motor winding and power electronic switch assembly (10) having switchable output capability as claimed in claim 2, wherein said configuration control means is configured to enable each selected matching pair of the power electronic switches (S1,S2,S3,S4,S5,S6,S7,S8,S9,S10,S11,S12) of said first switch set (11), said second switch set (21) and said third switch set (3) to perform a synchronous action or complementary action, said synchronous action being to synchronously turn on/off the two power electronic switches of each selected matching pair, said complementary action being to turn on one of the two power electronic switches of each selected matching pair and to turn off the other of the two power electronic switches of each selected matching pair.

4. The motor winding and power electronic switch assembly (10) having switchable output capability as claimed in claim 3, wherein in said configuration control means, when each said power electronic switch (S1,S2,S3,S4,S5,S6,S7,S8,S9,S10,S11,S12) is turned on, a pulse width modulation technique is applied to control each said power electronic switch (S1,S2,S3,S4,S5,S6,S7,S8,S9,S10,S11,S12), enabling said first winding set (AW), said second winding set (BW) and said third winding set (CW) to combine into a H type configuration or Y type configuration.

5. The motor winding and power electronic switch assembly (10) having switchable output capability as claimed in claim 4, wherein enabling said first winding set (AW), said second winding set (BW) and said third winding set (CW) to be combined into said Y type configuration is achieved using a field oriented control technique to control the pulse width modulation of each said power electronic switch (S1,S2,S3,S4,S5,S6,S7,S8,S9,S10,S11,S12); enabling said first winding set (AW), said second winding set (BW) and said third winding set (CW) to be combined into said H type configuration is achieved by controlling the terminal voltage or voltage modulation rate of each of said first switch set (11), said second switch set (21) and said third switch set (31).

6. The motor winding and power electronic switch assembly (10) having switchable output capability as claimed in claim 1, wherein the number of a motor stator grooves for said first upper winding (AW1), said first lower winding (AW2), said second upper winding (BW1), said second lower winding (BW2), said third upper winding (CW1) and said third lower winding (CW2) is a multiple of 3.

7. The motor winding and power electronic switch assembly (10) having switchable output capability as claimed in claim 6, wherein said pulse width modulation technique is performed using one of sinusoidal drive configuration square wave drive configuration.

8. The motor winding and power electronic switch assembly (10) having switchable output capability as claimed in claim I, wherein said first upper winding (AW1) and said first lower winding (AW2) are symmetrical; said second upper winding (BW1) and said second lower winding (BW2) are symmetrical; said third upper winding (CW1) and said third lower winding (CW2) are symmetrical.

FIG.1

FIG.2

FIG.3

EP 2 797 221 A1

EP 2 797 221 A1

a
b
c

Status5

a
b
c

Status3

a
b
c

Status6

a
b
c

Status1

a
b
c

Status2

a
b
c

Status4

FIG.4

FIG.5

FIG.6

FIG.7

FIG.8

FIG.9

Europäisches
Patentamt

European
Patent Office

Office européen
des brevets

# EUROPEAN SEARCH REPORT

Application Number

EP 13 16 5238

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/316462 A1 (BOUCHEZ BORIS [FR] ET AL) 29 December 2011 (2011-12-29) * paragraph [0054]; figure 9 * | 1,2,6-8 | INV. H02P25/18 |
| A | US 2011/074326 A1 (SU GUI JIA [US]) 31 March 2011 (2011-03-31) * paragraph [0030]; figure 5 * | 1-8 | |
| A | US 2010/225261 A1 (TAKEUCHI KESATOSHI [JP] ET AL) 9 September 2010 (2010-09-09) * paragraph [0097]; figure 20 * | 1-8 | |

TECHNICAL FIELDS
SEARCHED      (IPC)

H02P

The present search report has been drawn up for all claims

| Place of search | Date of completion of the search | Examiner |
|---|---|---|
| Munich | 19 September 2013 | Schürle, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 16 5238

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2013

| Patent document cited in search report | | Publication date | Patent family member(s) | | Publication date |
|---|---|---|---|---|---|
| US 2011316462 | A1 | 29-12-2011 | BR | PI1102742 A2 | 20-11-2012 |
| | | | BR | PI1103225 A2 | 27-11-2012 |
| | | | CA | 2743323 A1 | 25-12-2011 |
| | | | CN | 102299655 A | 28-12-2011 |
| | | | EP | 2407339 A1 | 18-01-2012 |
| | | | FR | 2961972 A1 | 30-12-2011 |
| | | | JP | 2012070612 A | 05-04-2012 |
| | | | KR | 20120000523 A | 02-01-2012 |
| | | | US | 2011316462 A1 | 29-12-2011 |
| US 2011074326 | A1 | 31-03-2011 | NONE | | |
| US 2010225261 | A1 | 09-09-2010 | JP | 2010233441 A | 14-10-2010 |
| | | | US | 2010225261 A1 | 09-09-2010 |
| | | | US | 2012206079 A1 | 16-08-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 401923
- TW 200538322